# DEMANDE DE BREVET EUROPEEN

(11) **EP 1 746 536 A2**
(43) Date de publication de la demande: **24.01.2007**
(21) Numéro de dépôt: 06291147.4
(22) Date de dépôt: 13.07.2006
(51) Int. Cl.: G06Q 30/00

(54) **Dispositif de mesure d'audience, terminal, procédé de collecte d'informations, programme d'ordinateur, dispositif de collecte et serveur**

(30) Priorité: 18.07.2005 FR 0507626
(71) Demandeur: France Telecom S.A., 75015 Paris (FR)
(72) Inventeur: Etienne, Jean-Francois, 94800 Villejuif (FR); Dion, Christophe, 35590 Acigne (FR); Rouchy, Stèphane, 35230 Saint Armel (FR)
(74) Mandataire: de la Bigne, Guillaume Michel Marie

(57) **Abrégé**

L'invention a pour objet un dispositif de mesure d'audience d'un objet utilisé par au moins un utilisateur comprenant des moyens (22, 30) d'acquisition du contenu d'une étiquette (12, 14, 16, 18) portée par l'objet utilisé, et des moyens (26) de transmission d'au moins une information à un serveur (28) de données distant, ladite information comportant le contenu de l'étiquette acquise.

## Description

La présente invention concerne un dispositif de mesure d'audience, un terminal, un procédé de collecte d'informations, un programme d'ordinateur, un dispositif de collecte et d'analyse d'informations et un serveur.

L'invention concerne plus précisément le domaine des enquêtes par sondage auprès d'un utilisateur pour connaître ses habitudes d'utilisation d'un objet, par exemple ses habitudes de lecture d'un journal de presse écrite.

Généralement, pour effectuer de telles enquêtes, on soumet à un utilisateur un questionnaire thématique concernant ses habitudes d'utilisation de l'objet. Ce questionnaire peut être soumis par écrit ou par oral, notamment par téléphone. Dans ce questionnaire, on trouve couramment des questions sur la fréquence d'utilisation de l'objet, sa durée d'utilisation, les habitudes d'utilisation, la provenance de l'objet utilisé ou la date de sa dernière utilisation. Les résultats de ces enquêtes permettent d'obtenir des indicateurs concernant les habitudes d'utilisation d'un objet.

Dans le contexte de la presse écrite, un indicateur couramment utilisé est la « lecture dernière période », c'est-à-dire l'ensemble des personnes dont la date de dernière lecture déclarée est inférieure ou égale au nombre de jours séparant deux parutions consécutives.

Pour répondre au questionnaire, un utilisateur fait appel à sa mémoire. Or, il se peut que la mémoire de l'utilisateur soit défaillante. Ces questionnaires ne permettent donc d'obtenir que des réponses partielles et approximatives.

De plus, de tels questionnaires sont inefficaces pour connaître le nombre de personnes qui ont réellement utilisé un même objet. Or, il s'agit là d'une donnée particulièrement importante. En effet, il n'est pas rare qu'un même utilisateur utilise plusieurs fois le même objet ou qu'il prête son objet à un autre utilisateur. Il existe alors un risque de sous-estimation des résultats qui entraîne un biais dans les résultats.

Par exemple il est intéressant de connaître précisément le nombre de personnes touchées par une campagne publicitaire dans des journaux, dont un même exemplaire peut être lu par plusieurs personnes différentes. Or, avec des sondages classiques, on assimile à tord l'audience du journal à l'audience de la publicité contenue dans le journal ce qui fausse les résultats obtenus.

Il se peut également que la formulation même du questionnaire soit ambiguë et entraîne des erreurs dans les résultats. Par exemple, pour mesurer la « lecture dernière période », la question suivante est généralement posée : « quand pour la dernière fois, avez-vous lu ou simplement feuilleté, chez vous ou en dehors, un numéro même ancien de tel magazine ? ». Les réponses obtenues à cette question ne permettent pas de distinguer les lecteurs réguliers des personnes qui ont simplement feuilleté le magazine.

Enfin, ces sondages étant réalisés sur un petit nombre de personnes, il faut corriger les résultats au moyen de calculs statistiques complexes qui ne permettent pas de supprimer toutes les erreurs de mesure.

Les méthodes de l'état de la technique pour connaître les habitudes d'utilisation d'un objet par un utilisateur sont donc des méthodes qui ne permettent d'obtenir que des résultats approximatifs. Aucune méthode ni aucun dispositif connus ne permettent de connaître l'utilisation réelle d'un objet par un utilisateur.

L'invention propose de remédier à ces inconvénients grâce à l'utilisation d'un dispositif de mesure d'audience.

A cet effet, l'invention a pour objet un dispositif de mesure d'audience d'un objet utilisé par au moins un utilisateur, comprenant :
- des moyens d'acquisition du contenu d'une étiquette portée par l'objet utilisé,
- des moyens de transmission d'au moins une information à un serveur de données distant, ladite information comportant le contenu de l'étiquette acquise.

On entend par étiquette à la fois un élément rapporté sur un objet (par exemple collé sur l'objet) et également un élément faisant partie de l'objet (par exemple une étiquette imprimée sur l'objet).

Il suffit donc que l'utilisateur ait en permanence avec lui un tel dispositif de mesure d'audience. Par exemple, on peut intégrer un tel dispositif de mesure d'audience sur un terminal mobile.

Grâce à l'invention, on tire profit du fait qu'un utilisateur possède généralement un terminal mobile, tel qu'un téléphone portable, et qu'il ne s'en sépare que rarement. En particulier, lors de l'utilisation d'un objet, l'utilisateur est en possession de son terminal mobile. En munissant l'objet d'une étiquette et en dotant le terminal mobile de moyens d'acquisition du contenu de cette étiquette, on peut recueillir automatiquement et systématiquement des informations concernant l'utilisation de cet objet. Par conséquent, on améliore la précision des sondages visant à connaître les habitudes d'utilisation de l'objet.

De plus, étant donné que l'objet peut être identifié de manière unique grâce à son étiquette, il est tout à fait possible de connaître avec précision la fréquence d'utilisation de cet objet et même le nombre d'utilisateurs distincts de cet objet.

Un dispositif de mesure d'audience selon l'invention peut en outre comporter l'une ou plusieurs des caractéristiques suivantes.
- Le dispositif comprend en outre des moyens d'interprétation du contenu de l'étiquette, l'étiquette contenant notamment un identifiant constituant une information destinée à être transmise au serveur de données distant. Dans le cas ou le dispositif de mesure d'audience est inclus dans un terminal mobile, ces moyens d'interprétation peuvent être inclus dans le terminal mobile. Sinon, ces moyens d'interprétation peuvent au contraire être inclus dans le serveur de données distant.
- Le dispositif comprend des moyens de déclenchement des moyens d'acquisition. Ces moyens peuvent être manuels ou automatiques.
- Les moyens de déclenchement comprennent des moyens de détection de présence d'un objet au voisinage du dispositif de mesure d'audience.
- Le dispositif comprend des moyens de stockage d'un questionnaire concernant l'utilisation de l'objet. Un tel questionnaire permet d'améliorer la précision des résultats de mesure d'audience. On peut ainsi stocker un questionnaire par défaut dans le dispositif de mesure d'audience.
- Le dispositif comporte des moyens de téléchargement d'un questionnaire stocké dans le serveur de données distant.
- Le dispositif comprend des moyens d'activation des moyens de transmission, ces moyens d'activation étant aptes à activer les moyens de transmission dès l'acquisition du contenu de l'étiquette ou postérieurement.

L'invention a également pour objet un terminal mobile comportant un dispositif de mesure d'audience selon l'invention, par exemple un téléphone portable.

Un terminal mobile selon l'invention peut en outre comporter l'une ou plusieurs des caractéristiques suivantes.
- Les moyens d'acquisition comprennent un appareil photographique numérique. Grâce à l'appareil photographique numérique, l'utilisateur du terminal mobile peut ainsi acquérir le contenu d'une étiquette portée par un objet de manière active, en photographiant cette étiquette.
- L'étiquette de l'objet contient un code-barres et les moyens d'interprétation du code-barres comprennent un logiciel de reconnaissance d'images. Grâce au logiciel de reconnaissance d'images, le terminal mobile peut interpréter la photographie du code-barres et en extraire la suite de numéros qui composent ce code-barres, cette suite de numéros constituant un identifiant de l'objet.
- L'étiquette de l'objet étant une puce RFID, les moyens d'acquisition comprennent un lecteur de puce RFID. La technologie RFID permet d'acquérir le contenu d'une étiquette portée par un objet de manière automatique et sans contact. Il est ainsi possible d'acquérir ce contenu de manière totalement passive et automatique. Ainsi, le sondage concernant l'habitude d'utilisation de l'objet n'est pas contraignant pour l'utilisateur puisque celui-ci n'a pas à effectuer de manipulations particulières, ce qui permet d'éviter notamment des oublis de sa part et améliore ainsi la fiabilité du sondage. En variante, l'étiquette de l'objet peut utiliser la technologie NFC (de l'anglais Near Field Communication) qui également une technologie de puces sans contacts.

L'invention a également pour objet un procédé de collecte d'informations concernant l'utilisation d'un objet par un utilisateur, caractérisé en ce qu'il comprend les étapes suivantes :
- acquisition du contenu d'une étiquette portée par l'objet utilisé,
- transmission d'au moins une information à un serveur de données distant, ladite information comportant le contenu de l'étiquette acquise.

De manière optionnelle, le procédé selon l'invention comprend en outre une étape préliminaire de surveillance de la présence d'un objet muni d'une étiquette, l'étape d'acquisition ayant lieu en cas de détection de la présence d'un objet.

Dans ce procédé de collecte, l'étape de surveillance peut être mise en oeuvre par l'utilisateur qui surveille visuellement la présence d'une étiquette portée un objet, notamment d'un code-barres. Dans ce cas, le voisinage du terminal mobile est défini comme étant la zone à portée de vue de l'utilisateur ou la zone d'utilisation de l'objet. Cette étape de surveillance peut également être mise en oeuvre de manière automatique grâce à un lecteur de puces RFID qui surveille la présence d'une puce RFID dans son voisinage. Dans cet autre cas, le voisinage du terminal mobile est défini comme étant la zone dans laquelle les moyens de détection sont opérationnels (par exemple la zone couverte par le lecteur de puces RFID). Bien entendu, lorsque la surveillance est effectuée de manière automatique, on augmente la pertinence du sondage.

Un procédé de collecte selon l'invention peut en outre comporter l'une ou plusieurs des caractéristiques suivantes.
- Le procédé comprend une étape d'interprétation du contenu de l'étiquette, l'étiquette contenant notamment un identifiant constituant une information destinée à être transmise au serveur de données distant.
- Le procédé est mis en oeuvre au moyen d'un dispositif de mesure d'audience ou d'un terminal mobile tels que précédemment définis.
- La surveillance de la présence d'un objet est limitée à un voisinage du dispositif de mesure d'audience.
- L'information transmise lors de l'étape de transmission est l'une quelconque de la liste constituée par un identifiant issu d'une interprétation du contenu de l'étiquette, un identifiant du dispositif de mesure d'audience, un fichier numérique contenant des réponses à un questionnaire, la date et/ou l'heure d'acquisition du contenu de l'étiquette. La transmission de l'identifiant issu de l'interprétation du contenu de l'étiquette permet de connaître le nombre d'utilisations de cet objet ainsi que sa fréquence d'utilisation. Si de plus le serveur de données distant comprend des moyens d'horodatage de l'information reçue, on peut connaître précisément les jours et les heures d'utilisation de cet objet. Il est avantageux que lors de l'étape de transmission de l'identifiant au serveur de données distant, le terminal mobile envoie également une information permettant de l'identifier. Ainsi, on obtient des informations concernant la personne qui utilise cet objet. Cela permet notamment de connaître le nombre de personnes différentes qui ont utilisé un même objet ou de connaître l'âge ou le métier par exemple des utilisateurs de cet objet. Enfin, le terminal mobile peut envoyer un fichier numérique contenant des réponses à un questionnaire pour connaître de manière plus précise les modalités d'utilisation de l'objet.
- Le procédé de collecte, dans lequel les informations transmises comprennent au moins l'identifiant issu de l'interprétation du contenu de l'étiquette et l'identifiant du dispositif de mesure d'audience, comprend en outre les étapes suivantes :
   - réception de l'identifiant issu de l'interprétation du contenu de l'étiquette et de l'identifiant du dispositif de mesure d'audience par le serveur de données distant,
   - transmission au dispositif de mesure d'audience de l'utilisateur d'un fichier numérique comprenant un questionnaire concernant l'utilisation de l'objet, le questionnaire étant éventuellement fonction de l'identifiant du dispositif de mesure d'audience,
   - réception par le dispositif de mesure d'audience du questionnaire,
   - transmission au serveur de données distant d'un fichier numérique contenant des réponses au questionnaire.
   Si l'on souhaite connaître plus précisément les conditions d'utilisation de l'objet, le serveur de données peut transmettre au terminal mobile un questionnaire spécifique auquel l'utilisateur peut répondre. Ce questionnaire peut être spécialement adapté à l'objet utilisé puisque le serveur connaît l'objet utilisé par l'utilisateur grâce à l'identifiant.
- Si l'étiquette de l'objet est une puce RFID contenant un fichier numérique comprenant un questionnaire concernant l'utilisation de l'objet, on met en oeuvre les étapes suivantes :
   - lors de l'étape d'acquisition du contenu de l'étiquette portée par l'objet, téléchargement du fichier numérique comprenant le questionnaire,
   - transmission au serveur de données distant d'un fichier numérique contenant des réponses au questionnaire.
   On sait que, outre un identifiant, une puce RFID peut contenir un fichier numérique tel qu'un questionnaire. Ce questionnaire peut être téléchargé par le terminal mobile lors de la lecture de la puce RFID. Il est alors possible d'afficher sur un écran du terminal mobile des questions spécifiques à l'utilisation de l'objet. Les réponses à ce questionnaire sont ensuite transmises au serveur de données distant sous la forme d'un fichier numérique. Cela permet d'augmenter la précision des sondages.
- L'identifiant issu de l'interprétation du contenu de l'étiquette est spécifique à l'objet. Par spécifique, on entend que deux objets distincts, même identiques, possèdent deux identifiants distincts. Ainsi, cela permet de connaître, non pas l'utilisation d'un type d'objet, mais l'utilisation d'un objet identifié en particulier.
- L'objet est une publication de presse. Cette invention s'applique tout particulièrement aux sondages destinés à connaître les habitudes de lecture d'une publication de presse. Grâce à l'invention, il devient possible de connaître précisément le nombre de personnes qui ont lu un même journal. Ceci est particulièrement utile pour indiquer à des annonceurs le nombre de personnes qui consultent réellement le journal, ce nombre étant généralement très supérieur au tirage du journal.

L'invention a également pour objet un programme d'ordinateur destiné à la mesure d'audience d'un objet utilisé par au moins un utilisateur, caractérisé en ce qu'il comprend des instructions d'appel de moyens de d'acquisition d'une étiquette portée par l'objet utilisé et des instructions d'appel de moyens de transmission d'au moins une information à un serveur de données distant, ladite information comportant le contenu de l'étiquette acquise.

L'invention a également pour objet un dispositif de collecte et d'analyse d'informations concernant l'utilisation d'un objet par un utilisateur, caractérisé en ce qu'il comprend des moyens de réception d'informations de mesure d'audience relatives à un objet utilisé par un utilisateur, des moyens de stockage de ces informations, des moyens d'analyse statistique de ces informations.

L'invention a également pour objet un serveur caractérisé en ce qu'il comporte un dispositif de collecte et d'analyse tel que précédemment défini.

L'invention sera mieux comprise à la lecture de la description qui va suivre, donnée uniquement à titre d'exemple et faite en se référant aux dessins annexés dans lesquels :
- la figure 1 est un schéma d'un terminal mobile selon un premier mode de réalisation de l'invention ;
- la figure 2 représente schématiquement les étapes d'un procédé de collecte selon l'invention au moyen du terminal mobile représenté sur la figure 1 ;
- la figure 3 est un schéma des étapes d'un procédé de collecte selon l'invention au moyen d'un terminal mobile selon un second mode de réalisation.

L'invention telle que définie permet de connaître les habitudes d'utilisation d'un objet 10 par un utilisateur. A titre d'exemple, on décrira l'application particulière de l'invention à une publication de presse écrite, telle qu'un journal 10.

Le journal 10 est muni d'une étiquette 12 contenant des données permettant de l'identifier. Ces données sont par exemple le nom du journal, sa date de publication ou un identifiant unique du journal, différent d'un exemplaire à l'autre.

L'étiquette 12 portée par le journal 10 peut être imprimée ou rapportée sur celui-ci. A titre d'exemple d'étiquettes imprimées, on peut citer un code-barres 14, un logo 16 du journal 10, le titre du journal écrit en caractères d'imprimerie ou un identifiant distinct sous la forme d'un numéro. Concernant les étiquettes rapportées, on peut coller sur le journal une puce RFID 18 (de l'anglais Radio Frequency IDentification).

Pour collecter les informations contenues dans l'étiquette portée par le journal, on utilise un terminal mobile 20 tel qu'un terminal de téléphonie mobile, un assistant numérique personnel ou un ordinateur portable. Par la suite, on décrira l'invention en se référant à un terminal de téléphonie mobile.

Le terminal 20 de téléphonie mobile comprend un dispositif 21 de mesure d'audience selon l'invention.

Le dispositif 21 de mesure d'audience comprend des moyens 22 d'acquisition du contenu de l'étiquette 12 portée par le journal 10, des moyens 24 d'interprétation du contenu de l'étiquette et des moyens 26 de transmission d'informations à un serveur 28 de données distant, notamment de l'identifiant issu de l'interprétation du contenu de l'étiquette 12.

Dans la suite de la description, par souci de clarté, le terminal mobile 20 et le dispositif de mesure d'audience 21 seront confondus. Bien entendu, l'utilisation d'un terminal mobile comprenant un dispositif de mesure d'audience selon l'invention ne constitue qu'un exemple non limitatif. Le dispositif de mesure d'audience peut être intégré sur tout autre dispositif qu'un utilisateur possède avec lui en permanence, quasi-systématiquement, ou de manière suffisamment régulière lors de l'utilisation de l'objet pour lequel la mesure d'audience est effectuée. On peut par exemple inclure un dispositif de mesure d'audience dans la doublure d'un de ses vêtements.

Le terminal mobile comprend également des moyens de déclenchement (non-représentés) des moyens d'acquisition.

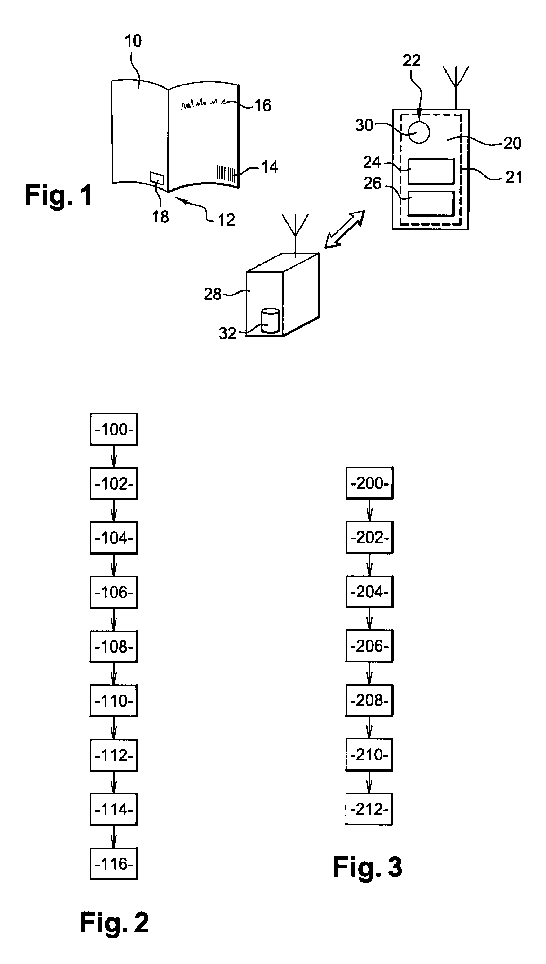

Selon un premier mode de réalisation de l'invention représenté sur la figure 1, les moyens 22 d'acquisition du terminal 20 de téléphonie mobile comprennent un appareil photographique numérique 30. Ces moyens d'acquisition sont déclenchés manuellement. On trouve désormais couramment de tels téléphones mobiles dans le commerce. Ce premier mode de réalisation du terminal de téléphonie mobile est destiné à coopérer avec des journaux 10 munis d'une étiquette imprimée. L'appareil photographique numérique permet de prendre une photo de cette étiquette.

Les moyens 24 d'interprétation du contenu de l'étiquette de ce terminal mobile comprennent un logiciel de reconnaissance d'images. On intègre pour cela dans la mémoire du terminal de téléphonie mobile un tel logiciel de reconnaissance d'images. Grâce à ce logiciel de reconnaissance d'images, on peut interpréter la photographie de l'étiquette du journal. Par exemple, dans le cas où l'étiquette est un code-barres, la reconnaissance d'images permet d'en extraire le numéro codé sous la forme du code-barres. Dans le cas où l'étiquette est constituée par le logo 16 du journal 10, le logiciel de reconnaissance d'images, de préférence un logiciel de reconnaissance de caractères, permet d'en extraire le titre du journal.

Selon un second mode réalisation du terminal 20 de téléphonie mobile, les moyens d'acquisition 22 comprennent un lecteur de puces RFID. Les moyens de déclenchement de ces moyens d'acquisition comprennent des moyens de détection de présence d'un objet au voisinage du terminal. Un terminal de téléphonie mobile selon le second mode de réalisation de l'invention est utilisé lorsque l'étiquette rapportée sur le journal est une puce RFID 18. On couple donc le terminal 20 de téléphonie mobile avec un périphérique permettant la lecture de puces RFID.

Dans les deux modes de réalisation de l'invention, les moyens 26 de transmission d'informations au serveur 28 de données distant utilisent des technologies de communication à distance connues telles que le Wl-Fl, le bluetooth, le GSM ou l'UMTS.

Le serveur 28 de données distant est un serveur classique comprenant des moyens 32 de stockage de données transmises par le terminal mobile 20. Les moyens de stockage 32 peuvent également garder en mémoire différents questionnaires à soumettre à l'utilisateur du terminal de téléphonie mobile. Selon une variante de l'invention, chaque questionnaire est spécifique à une catégorie d'objet (par exemple, un journal). Selon une autre variante, les questionnaires sont différents pour chaque objet distinct d'une même catégorie (par exemple, un questionnaire A pour le journal X et un questionnaire B pour le journal Y). Enfin, selon une autre variante, le questionnaire est un questionnaire par défaut qui est par exemple stocké dans le terminal mobile, dont les questions sont générales et conviennent à tout type d'objet.

Une fois que les données ont été collectées par le terminal de téléphonie mobile et transmises au serveur de données distant, ce dernier procède à l'analyse des résultats pour fournir des statistiques détaillées sur l'utilisation du journal. Le traitement des données collectées est effectué de manière classique grâce à des calculs statistiques et ne fait pas partie de l'objet de l'invention.

Dans les exemples décrits, le terminal mobile comprend des moyens d'interprétation. Cependant, ces moyens peuvent être contenus dans le serveur 28. On peut également se passer de moyens d'interprétations. Dans ce cas, des données brutes sont envoyées au serveur distant qui procède à des analyse statistiques de ces données brutes, sans nécessairement les interpréter.

Dans la suite de la description, on détaillera le procédé de collecte selon l'invention, au moyen d'un terminal mobile 20 tel que précédemment décrit, en référence aux figures 2 et 3.

Les étapes d'un procédé de collecte au moyen d'un terminal mobile selon le premier mode de réalisation de l'invention sont décrites en référence à la figure 2.

Au cours d'une première étape 100, l'utilisateur du terminal 20 de téléphonie mobile surveille la présence d'un journal 10 muni d'une étiquette 12 dans son voisinage.

Lors d'une étape suivante 102, l'utilisateur détecte visuellement la présence d'un tel journal 10. Il utilise alors l'appareil photographique numérique 30 de son terminal 20 de téléphonie mobile pour prendre une photo de l'étiquette 12 portée par le journal 10 afin d'en acquérir le contenu. Par exemple, il prend une photo du code-barres 14 du journal 10 au cours d'une étape 104.

La photo du code-barres 14 est ensuite interprétée par le logiciel de reconnaissance d'images intégré dans le terminal de téléphonie mobile lors d'une étape 106. Par exemple, le logiciel de reconnaissance d'images déduit de la photo du code-barres le numéro associé à ce code-barres. Ce numéro constitue un identifiant du journal.

Lors d'une étape suivante 108, le terminal de téléphonie mobile transmet cet identifiant ainsi qu'un identifiant du terminal de téléphonie mobile au serveur 28 de données distant. Le terminal mobile peut également transmettre la date et/ou l'heure de l'acquisition du contenu de l'étiquette.

Après réception de l'identifiant issu de l'interprétation du contenu de l'étiquette et de l'identifiant du terminal mobile par le serveur de données distant, celui-ci analyse ces informations au cours d'une étape 110. En particulier, le serveur 28 de données distant recherche dans les moyens de stockage 32 s'il possède un questionnaire relatif à l'utilisation du journal 10 dont l'identifiant lui a été transmis.

Si le serveur de données distant possède un questionnaire concernant l'utilisation de ce journal, il transmet au cours d'une étape 112 au terminal 10 de téléphonie mobile de l'utilisateur un fichier numérique comprenant ce questionnaire.

Au cours d'une étape 114, l'utilisateur reçoit sur son terminal de téléphonie mobile le fichier numérique comprenant le questionnaire, par exemple sous la forme d'un SMS, d'un MMS ou d'un fichier joint à un courrier électronique. Le terminal mobile peut également comprendre des moyens de téléchargement d'un questionnaire stocké dans le serveur de données.

L'utilisateur est alors libre de répondre ou non à ce questionnaire concernant l'utilisation du journal 10 qu'il est en train de lire. Si l'utilisateur souhaite répondre à ce questionnaire, il peut transmettre au cours d'une étape 116 au serveur de données un fichier numérique contenant des réponses à ce questionnaire, notamment sous la forme d'un SMS.

Ainsi, grâce à ce procédé de collecte selon l'invention, le serveur 28 de données distant reçoit au minimum des informations concernant le type de journal actuellement utilisé ainsi que l'identifiant du terminal de téléphonie mobile de la personne qui est en train de lire ce journal. En munissant le serveur 28 de données distant d'informations concernant l'utilisateur habituel du terminal 20 de téléphonie mobile identifié, on peut alors déterminer avec précision le profil de la personne qui est en train de lire ce journal. On peut notamment s'intéresser au sexe, à l'âge ou à la profession de cette personne.

Si de plus, l'utilisateur a pris le temps de répondre au questionnaire qui lui a été envoyé, on peut avoir accès à des informations complémentaires qui permettent d'affiner les sondages. En particulier, on peut poser à l'utilisateur des questions au sujet de ses attentes ou de la satisfaction qu'il tire de la lecture de cette publication.

Un procédé de collecte utilisant le terminal mobile selon un second mode de réalisation de l'invention va maintenant être décrit en référence à la figure 3.

Au cours d'une première étape 200, le terminal de téléphonie mobile surveille automatiquement la présence d'une puce RFID dans son voisinage.

Au cours d'une étape suivante 202, le terminal de téléphonie mobile détecte la présence d'une étiquette RFID portée par un journal que l'utilisateur est en train de lire. On suppose dans cet exemple que la puce RFID portée par le journal contient d'une part, un identifiant du journal, c'est-à-dire le nom, le numéro ou la date de publication du journal, et d'autre part, contient un fichier numérique comprenant un questionnaire relatif à l'utilisation de ce journal. En effet, les puces RFID peuvent stocker des fichiers numériques de petite taille qui peuvent être téléchargés par des lecteurs de puces RFID.

Au cours d'une étape 204, le terminal de téléphonie mobile acquiert le contenu de cette étiquette RFID, c'est-à-dire l'identifiant et le fichier numérique comprenant le questionnaire.

Au cours d'une étape 206, le terminal de téléphonie mobile interprète le contenu de l'étiquette et présente sur l'écran du terminal de téléphonie mobile le questionnaire sous une forme adaptée à sa lecture.

Au cours d'une étape 208 suivante, l'utilisateur du terminal mobile utilise le clavier de ce terminal pour répondre au questionnaire qui s'est affiché sur son écran.

Une fois le questionnaire rempli, l'utilisateur peut valider ses réponses. Au cours d'une étape 210, le terminal de téléphonie mobile transmet au serveur de données distant un fichier numérique contenant les réponses au questionnaire ainsi que l'identifiant du journal qui était contenu dans la puce RFID.

Au cours d'une étape finale 212, le serveur de données distant procède à l'analyse des informations qu'il a reçues en provenance du terminal de téléphonie mobile. Cette analyse est similaire à celle décrite dans le premier mode de réalisation de l'invention.

Le second mode de réalisation qui vient d'être décrit peut être mis en oeuvre de manière totalement passive, c'est-à-dire sans que l'utilisateur n'intervienne. C'est le cas notamment lorsque la puce RFID ne contient pas de questionnaire spécifique au journal. Dans ce cas, le terminal de téléphonie mobile ne transmet que l'identifiant issu de l'interprétation du contenu de la puce RFID au serveur de données distant.

On peut prévoir de munir le terminal de téléphonie mobile de la possibilité de désactiver cette fonctionnalité d'envoi automatique des identifiants détectés sur les objets utilisés. Ainsi, l'utilisateur du terminal mobile peut sélectionner les informations qu'il souhaite faire parvenir au serveur de données distant. En d'autres termes, la fonctionnalité d'envoi automatique des identifiants est soumise au préalable à une acceptation de la part de l'utilisateur du terminal.

Dans les deux modes de réalisation du procédé de collecte de l'invention qui vient d'être décrit, la transmission des informations au serveur de données distant est instantanée, dès la détection d'une étiquette au voisinage du terminal mobile. Cette transmission est activée au moyen de moyens d'activation (non-représenté) des moyens de transmission.

Cependant, il se peut que, lors de la détection de cette étiquette, le terminal de téléphonie mobile ne soit pas en mesure d'établir une connexion avec le serveur de données distant. Dans ce cas, on prévoit que le terminal mobile garde en mémoire les différentes informations à transmettre et qu'il les transmette au serveur de données distant dès que la connexion est à nouveau possible. Il est alors particulièrement intéressant que la date et l'heure d'acquisition du contenu de l'étiquette soit envoyé au serveur distant pour que l'analyse statistique soit pertinente.

Selon une autre variante, les informations sont transmises au serveur de données de façon périodique (une fois par jour ou toutes les heures par exemple). Selon une autre variante, les informations sont transmises lorsque le terminal passe en mode de veille. Selon une autre variante, si le terminal est apte à se connecter à plusieurs réseaux différents, on peut prévoir que la transmission des informations au serveur de données n'a lieu que lorsque le terminal est connecté à un réseau prédéfini.

L'invention ne se limite pas aux modes de réalisation qui viennent d'être décrits. En particulier, l'invention n'est pas limitée à des journaux de presse écrite et peut être appliquée à n'importe quel objet. Par exemple, il peut être intéressant de doter un produit nouveau d'une telle étiquette afin de connaître l'évolution de son utilisation au cours du temps. Si l'on constate que ce produit est de moins en moins utilisé, on peut alors décider d'en commercialiser une nouvelle version plus évoluée. L'invention permet donc de connaître en permanence les performances commerciales d'un produit.

Selon une variante préférée, le terminal mobile comprend un lecteur de code-barres infrarouge. Dans ce cas, il n'est donc pas nécessaire de prévoir des moyens de reconnaissance d'image dans le terminal puisque le lecteur infrarouge permet d'extraire immédiatement l'identifiant contenu dans le code-barres.

## Revendications

1. Dispositif (21) de mesure d'audience d'un objet utilisé par au moins un utilisateur, comprenant :
• des moyens (22, 30) d'acquisition du contenu d'une étiquette (12, 14, 16, 18) portée par l'objet utilisé,
• des moyens (26) de transmission d'au moins une information à un serveur (28) de données distant, ladite information comportant le contenu de l'étiquette acquise.

2. Dispositif selon la revendication 1, comprenant en outre des moyens (26) d'interprétation du contenu de l'étiquette, l'étiquette contenant notamment un identifiant constituant une information destinée à être transmise au serveur de données distant.

3. Dispositif selon la revendication 1 ou 2, comprenant des moyens de déclenchement des moyens d'acquisition.

4. Dispositif selon la revendication 3, dans lequel les moyens de déclenchement comprennent des moyens de détection de présence d'un objet au voisinage du dispositif de mesure d'audience.

5. Dispositif selon l'une quelconque des revendications précédentes, comportant des moyens de stockage d'un questionnaire concernant l'utilisation de l'objet.

6. Dispositif selon l'une quelconque des revendications précédentes, comportant des moyens de téléchargement d'un questionnaire stocké dans le serveur de données distant.

7. Dispositif selon l'une quelconque des revendications précédentes, comportant des moyens d'activation des moyens (26) de transmission, ces moyens d'activation étant aptes à activer les moyens de transmission dès l'acquisition du contenu de l'étiquette ou postérieurement.

8. Terminal mobile (20) comportant un dispositif de mesure d'audience selon l'une quelconque des revendications précédentes.

9. Procédé de collecte d'informations concernant l'utilisation d'un objet par un utilisateur, **caractérisé en ce qu'**il comprend les étapes suivantes :
• acquisition (104 ; 204) du contenu d'une étiquette portée par l'objet utilisé,
• transmission (108 ; 210) d'au moins une information à un serveur (28) de données distant, ladite information comportant le contenu de l'étiquette acquise.

10. Procédé selon la revendication 9, comprenant en outre une étape préliminaire de surveillance de la présence (100 ; 200) d'un objet (10) muni d'une étiquette (12), l'étape d'acquisition ayant lieu en cas de détection (102 ; 202) de la présence d'un objet (10).

11. Procédé selon la revendication 9 ou 10, comprenant une étape d'interprétation (106 ; 206) du contenu de l'étiquette (12), l'étiquette contenant notamment un identifiant constituant une information destinée à être transmise au serveur de données distant.

12. Procédé selon l'une quelconque des revendications 9 à 11, mis en oeuvre au moyen d'un dispositif de mesure d'audience selon l'une quelconque des revendications 1 à 7.

13. Procédé selon la revendication 12, dans lequel la surveillance de la présence d'un objet est limitée à un voisinage du dispositif de mesure d'audience.

14. Procédé selon l'une quelconque des revendications 9 à 13, mis en oeuvre au moyen d'un terminal mobile selon la revendication 8.

15. Procédé selon l'une quelconque des revendications 12 à 14, dans lequel l'information transmise lors de l'étape de transmission est l'une quelconque de la liste constituée par un identifiant issu d'une interprétation du contenu de l'étiquette, un identifiant du dispositif de mesure d'audience, un fichier numérique contenant des réponses à un questionnaire, la date et/ou l'heure d'acquisition du contenu de l'étiquette.

16. Procédé selon la revendication 15, dans lequel les informations transmises comprennent au moins l'identifiant issu de l'interprétation du contenu de l'étiquette et l'identifiant du dispositif de mesure d'audience, le procédé comprenant en outre les étapes suivantes :
• réception (110) de l'identifiant issu de l'interprétation du contenu de l'étiquette et de l'identifiant du dispositif de mesure d'audience par le serveur de données distant,
• transmission (112) au dispositif de mesure d'audience de l'utilisateur d'un fichier numérique comprenant un questionnaire concernant l'utilisation de l'objet, le questionnaire étant éventuellement fonction de l'identifiant du dispositif de mesure d'audience,
• réception (114) par le dispositif de mesure d'audience du questionnaire,
• transmission (116) au serveur (28) de données distant d'un fichier numérique contenant des réponses au questionnaire.

17. Procédé selon la revendication 15, dans lequel, l'étiquette (12) de l'objet (10) étant une puce RFID (18) contenant un fichier numérique comprenant un questionnaire concernant l'utilisation de l'objet, on met en oeuvre les étapes suivantes :
• lors de l'étape d'acquisition (204) du contenu de l'étiquette portée par l'objet, téléchargement (204) du fichier numérique comprenant le questionnaire,
• transmission (210) au serveur (28) de données distant d'un fichier numérique contenant des réponses au questionnaire.

18. Procédé selon l'une quelconque des revendications 15 à 17, dans lequel l'identifiant issu de l'interprétation du contenu de l'étiquette est spécifique à l'objet.

19. Procédé selon l'une quelconque des revendications 15 à 18, dans lequel l'objet est une publication de presse.

20. Programme d'ordinateur destiné à la mesure d'audience d'un objet utilisé par au moins un utilisateur, **caractérisé en ce qu'**il comprend des instructions d'appel de moyens de d'acquisition d'une étiquette portée par l'objet utilisé et des instructions d'appel de moyens de transmission d'au moins une information à un serveur de données distant, ladite information comportant le contenu de l'étiquette acquise.

21. Dispositif de collecte et d'analyse d'informations concernant l'utilisation d'un objet par un utilisateur, **caractérisé en ce qu'**il comprend des moyens de réception d'informations de mesure d'audience relatives à un objet utilisé par un utilisateur, des moyens de stockage de ces informations, des moyens d'analyse statistique de ces informations.

22. Serveur **caractérisé en ce qu'**il comporte un dispositif selon la revendication 21.
